Europäisches Patentamt

European Patent Office

Office européen des brevets

(11) Veröffentlichungsnummer: **0 330 976 B1**

(12) **EUROPÄISCHE PATENTSCHRIFT**

(45) Veröffentlichungstag der Patentschrift: **19.11.92**

(21) Anmeldenummer: **89103028.0**

(22) Anmeldetag: **21.02.89**

(51) Int. Cl.⁵: **C04B 28/14**, E04F 15/12, //(C04B28/14,14:28)

(54) **Verfahren zur Herstellung eines belegereifen Estrichs aus Fliessestrichmasse.**

(30) Priorität: **03.03.88 DE 3806854**

(43) Veröffentlichungstag der Anmeldung:
**06.09.89 Patentblatt 89/36**

(45) Bekanntmachung des Hinweises auf die
Patenterteilung:
**19.11.92 Patentblatt 92/47**

(84) Benannte Vertragsstaaten:
**AT BE CH DE FR IT LI NL**

(56) Entgegenhaltungen:
**DE-A- 3 217 342**
**FR-A- 2 317 246**
**GB-A- 2 084 130**
**US-A- 2 785 988**

(73) Patentinhaber: **Gebr. Knauf Westdeutsche
Gipswerke
Am Bahnhof 7
W-8715 Iphofen(DE)**

(72) Erfinder: **Ruf, Heinz, Dipl.-Phy.,Dr.
Fichtbauerweg 7
W-8717 Mainbernheim(DE)**
Erfinder: **Wirsching, Franz, Dipl.-Chem.,Dr.
In den Weinbergen 7
W-8715 Iphofen(DE)**

(74) Vertreter: **Böhme, Volker, Dipl.-Ing.
Patentanwälte Dipl.-Ing. E. Kessel Dipl.Ing. V.
Böhme Karolinenstrasse 27
W-8500 Nürnberg 1(DE)**

EP 0 330 976 B1

## Beschreibung

Die Erfindung betrifft ein Verfahren zur Herstellung eines belegereifen Estrichs, bei dem eine Fließestrichmasse aus $\alpha$-Calciumsulfathalbhydrat als einzigem Bindemittel, inertem Zuschlagmaterial, Verflüssiger, Verzögerer und Wasser angemacht, vergossen und nach dem Abbinden bis zur Belegereife trocknen gelassen wird, wobei der Estrich eine Restfeuchte von maximal 1 Gew.% und eine Druckfestigkeit von mindestens 25 N/mm² aufweist.

Ein Estrich ist nach seiner Herstellung bzw. nach seinem Einbau belegereif, wenn er ausreichend fest und trocken für die Belegung mit einem Oberbelag ist. Unter einem frühbelegereifen Estrich wird ein Estrich verstanden, der schon frühzeitig, d.h. wenige Tage nach dem Einbau bzw. nach der Herstellung für die Belegung geeignet ist. Solche frühbelegereifen Estriche werden bekanntlich mit Trockenestrich, der plattenförmig verlegt, verklebt und verspachtelt wird, mit Schnellzementestrich, der erdfeucht verarbeitet wird und der das gesamte Anmachwasser beim Erhärten chemisch bindet, mit Gußasphalt oder mit Reaktionskunststoff hergestellt.

Selbstnivellierende Estriche, sogenannte Fließestriche, werden mit fließfähiger Konsistenz verarbeitet, die durch Zugabe einer entsprechenden Wassermenge zum Trockenmörtel eingestellt wird. Die Wasserzugabe ist trotz Verwendung von Verflüssigern jedoch immer so hoch, daß das Wasser beim Abbinden des Mörtels nicht vollständig durch die Abbindereaktion chemisch gebunden wird. Wegen des überschüssigen Wassers muß jeder Fließestrich zum Erreichen seiner Belegereife trocknen. Ein belegereifer Estrich auf Gipsbasis darf eine Restfeuchte von maximal 1 Gew.% aufweisen und soll bei Verlegung im Wohnungsbau die Festigkeitsklasse 20 erfüllen, d.h. er muß gemäß der Güteprüfung nach DIN 18560 eine Seriendruckfestigkeit von mindestens 25 N/mm² besitzen. Die Austrocknung der auf dem Markt befindlichen Fließestriche mit Bindemittel auf Gipsbasis beansprucht in der Regel etwa drei bis vier Wochen, wodurch der Baufortschritt verzögert wird. Diese lange Trocknungszeit ist dann von Nachteil, wenn kurze Bauzeiten, wie im Renovierungs- oder im Fertighausbau, gefordert werden.

Es ist im Bauwesen bekannt, auf erstellte Bausubstanz, apparative Trocknungsmaßnahmen auszuüben, um das Trocknen zu beschleunigen und Verzögerungen des Baufortschrittes zu vermindern. Unter Trocknungsmaßnahmen werden hier zusätzliche Maßnahmen verstanden, die den Austritt von Wasser aus der Bausubstanz fördern und die zum Beispiel im Zuführen von Wärme und/oder im Belüften bestehen. In der Praxis weisen derzeit Fließestriche auf Gipsbasis als Bindemittel synthetischen Anhydrit auf. Auf diese Fließestriche können Trocknungsmaßnahmen nicht ausgeübt, werden, weil sie zu Rissen beim trocknenden Estrich und zur Verminderung der Festigkeitseigenschaften führen.

Ein bekanntes (DE-OS 26 31 031) Verfahren der eingangs genannten Art verwendet $\alpha$-Calciumsulfathalbhydrat als Bindemittel und wird in der Praxis nicht durchgeführt, weil aus Naturgips gewonnenes $\alpha$-Calciumsulfathalbhydrat beachtlich teurer als synthetischer Anhydrit ist. Wenn als inertes Zuschlagmaterial Quarzsand verwendet wird, dann werden die zur Herstellung des Trockenmörtels und zur Verarbeitung der Fließestrichmasse verwendeten Maschinen stark verschlissen, wodurch das Verfahren weiter verteuert wird.

Eine Aufgabe der Erfindung ist es nun, in wirtschaftlicher Weise einen frühbelegereifen Estrich aus Fließestrichmasse zu schaffen. Die Erfindung sieht, diese Aufgabe lösend, ein Verfahren der eingangs genannten Art vor, das dadurch gekennzeichnet ist, daß gesondert von dem Anmachen mit Wasser ein Trockenmörtel gemischt wird, und zwar mit maximal 50 Gew.% $\alpha$-Calciumsulfathalbhydrat, das aus bei der Rauchgasentschwefelung anfallendem Gips im kontinuierlichen Autoklavverfahren gewonnen ist, und als Zuschlagmaterial Kalkstein, der frei von einem Feinkornanteil unter 40 $\mu$m ist, und daß auf die abgebundene Fließestrichmasse eine apparative Trocknungsmaßnahme ausgeübt wird.

Durch die gewählte Zusammensetzung und die Trocknungsmaßnahme wird die Austrocknung beschleunigt, so daß nachteilige Bauverzögerungen vermieden sind und die Belegereife früher als bisher erreicht ist. Fließestrich mit $\alpha$-Calciumsulfathalbhydrat als Bindemittel bindet nach der Verarbeitung sehr schnell ab. Der Verzögerer wird derart dosiert, daß eine Verarbeitungszeit von mindestens 60 min vorliegt und die Abbindereaktion nach spätestens acht Stunden vollständig abgeschlossen ist, so daß der ausgehärtete Estrich in kurzer Zeit ohne Nachteile, wie Festigkeitsverlust oder Rißbildung, getrocknet werden kann.

Das $\alpha$-Calciumsulfathalbhydrat, das aus bei der Rauchgasentschwefelung anfallendem Gips gewonnen ist, besitzt einen hohen Reinheitsgrad und erreicht deshalb im abgebundenen Zustand sehr ohne Festigkeiten. Das aus Rauchgasgips nach dem kontinuierlichen Autoklavverfahren gewonnene $\alpha$-Calciumsulfathalbhydrat ist wirtschaftlicher herstellbar und damit billiger als das aus Naturgips gewonnene. Außerdem wird durch die Verwendung dieses $\alpha$-Calciumsulfathalbhydrats die Entsorgungsleistung für den bei der Rauchgasentschwefelung anfallenden Gips erweitert. Nachdem der Einsatz von $\alpha$-Calciumsulfathalbhydrat für die Estrichherstellung durch die apparative Trocknungsmaßnahme und die dadurch erreichte Zeitersparnis in den Bereich wirtschaftlicher Brauchbarkeit gerückt ist, wird die Wirtschaftlichkeit nochmals verbessert durch die Verwendung von α-Calciumsulfathalbhydrat, das aus bei der Rauchgasentschwefelung anfallendem Gips gewonnen ist.

Durch die Verwendung des wenig Verschleiß verursachenden Zuschlagmaterials Kalkstein und die entsprechende Schonung der Maschinen zur Herstellung des Trockenmörtels und zur Verarbeitung der Fließestrichmasse gewinnt das erfindungsgemäße Verfahren weiter an Wirtschaftlichkeit. Durch Vermeidung des Zuschlagmaterial-Feinanteiles wird die zur Erziehung einer vorgegebenen Festigkeit benötigte Menge an α-Calciumsulfathalbhydrat vermindert und die Wirtschaftlichkeit weiter verbessert. Somit wirken die einzelnen Merkmale des erfindungsgemäßen Verfahrens zu einer in der Praxis brauchbaren, weil wirtschaftlichen Herstellung eines Fließestrichs zusammen.

Fließestriche mit anderen Bindemitteln, zum Beispiel synthetischem Anhydrit, Zement oder Kombinationen aus synthetischem Anhydrit mit Zement oder Calciumsulfathalbhydrat mit Zement, benötigen zum vollständigen Abbinden mehrere Wochen. Die langsame Hydratation erfordert auch eine langsame Austrocknung bzw. die lang anhaltende Feuchtigkeit ist damit eine Voraussetzung dafür, daß die Abbindereaktionen in diesen Estrichen vollständig ablaufen können und der Estrich die geforderte Endfestigkeit erreicht. Aus diesem Grund können auf derartige Estriche keine Trocknungsmaßnahmen ausgeübt werden. Durch eine vorzeitige Trocknung wird die Festigkeitsentwicklung unterbrochen und es kommt zwangsläufig zu einer starken Rißbildung.

Durch Zusatz von synthetischem Anhydrit, Zement, Kalkhydrat oder Alkalisulfaten, die in Anhydrit-Fließestrichen als Anreger oder in Gips-Gieß- und Fließmassen zur Steuerung der Abbindedehnung eingesetzt werden, wird die Austrocknung verlangsamt. Ähnlich wirkt der Einsatz von nicht inerten Zuschlagsstoffen, wie beispielsweise latent hydraulischen Hüttensanden. Die Austrocknung wird außerdem verzögert, wenn Sedimentationsverhinderer, wie beispielsweise Methylcellulose, eingesetzt werden, da sie in der Regel das Wasserrückhaltevermögen erhöhen.

Das erfindungsgemäße Verfahren ist wirtschaftlicher, weil durch die Anwendung von Trocknungsmaßnahmen Zeit gespart wird. Besonders zweckmäßig und vorteilhaft ist es, wenn die Zeit vom Vergießen des Fließestrichs (ca. 20 Gew.% freie Feuchte) bis zur Belegereife (max. 1 Gew.% freie Feuchte) bei Anwendung der Trocknungsmaßnahme maximal die Hälfte der Zeit des Trocknenlassens bei Normalverhältnissen mit 20°C und 85 % relativer Luftfeuchte ist. Mit der beschriebenen Fließestrichmasse können die Trocknungsmaßnahmen ohne nachteilige Auswirkungen mit einer Intensität durchgeführt werden, die eine besonders ausgeprägte Zeitersparnis zur Folge hat.

Die Trocknungsmaßnahme besteht zum Beispiel in einem Be- bzw. Entlüften mittels einer durch Ventilator erzeugten Luftströmung oder in einem Heizen mittels eines Heizgerätes oder im Entziehen von Feuchtigkeit aus der Umgebungsluft mittels eines Raumluftentfeuchters. Besonders zweckmäßig und vorteilhaft ist es, wenn die abgebundene Fließestrichmasse zum Trocknen mittels einer Fußbodenheizung erwärmt wird. Die sowieso vorhandene Fußbodenheizung erwärmt den Fließestrich von innen her und treibt die Feuchtigkeit aus.

Wenn der abgebundenen Fließestrichmasse als Trocknungsmaßnahme zusätzlich Wärme zugeführt wird, so führen höhere Temperaturen zu schnellerem Trocknen. Es ist jedoch darauf zu achten, daß bei einer Wärme-Trocknungsmaßnahme die Temperatur der abgebundenen Fließestrichmasse maximal 55°C beträgt. Temperaturen über 55°C schädigen den α-Calciumsulfathalbhydrat als Bindemittel enthaltenden Fließestrich.

Die Fließestrichmasse enthält in der Trockensubstanz in der Regel 35 - 50 Gew.% α-Calciumsulfathalbhydrat, 50 - 65 Gew.% inerten Kalkstein und maximal 1 Gew.% an Verflüssiger, Verzögerer sowie gegebenenfalls weiterer Zusatzkomponenten. Es ist Wasser im Rahmen eines bevorzugten Wasserfeststoffverhältnisses von 0,15 - 0,25 zuzugeben. Besonders zweckmäßig und vorteilhaft ist es, wenn die Fließestrichmasse mit einem Wasserfeststoffverhältnis 0,17 - 0,23 eingestellt ist.

Als inertes Zuschlagmaterial wird Kalkstein verwendet, der bei der Herstellung und der Verarbeitung weniger Verschleiß als beispielsweise Quarzsand bewirkt. Die Körnung des Zuschlagmaterials ist größer 40 μm und kleiner 1,4 mm. Von dem α-Calciumsulfathalbhydrat sollten 95 % eine Teilchengröße kleiner 90 μm aufweisen, wodurch die Selbstnivellierung gefördert wird. In der Regel wird das α-Calciumsulfathalbhydrat mit einer Einstreumenge von größer 250 g pro 100 ml Wasser nach DIN 1168 verwendet.

Nachfolgend wird die Erfindung anhand von Beispielen erläutert.
Die Druckfestigkeit der Estriche beträgt 8 Stunden nach der Verarbeitung für alle Beispiele 17 - 19 N/mm² und nach der Trocknung 28 - 32 N/mm².

Beispiel 1: Eine, in einem Raum untergebrachte 35 mm dicke Estrichfläche aus einer Mischung aus 50 GT α-Calciumsulfathalbhydrat und 50 GT Kalkstein mit Verflüssiger und Verzögerer, die fließfähig verarbeitet wird und nur nach oben austrocknen kann, erreicht unter Lagerung bei im Mittel 20°C und im Mittel 85 % relativer Luftfeuchtigkeit nach 7 Tagen eine Restfeuchte von 4 % und erst nach 16 Tagen von weniger als 1 %. Mit maximal 1 % Restfeuchte ist die Belegereife für dampfoffene Beläge (Textil, Fliesen) erreicht.

Beispiel 2: Eine, in einem Raum untergebrachte Estrichfläche nach Beispiel 1 erreicht unter mittels Ventilator bewirkter Be- und Entlüftung, so daß 20°C und 65 % relative Luftfeuchte herrschen, schon nach 7 Tagen eine Restfeuchte von weniger als 1 %.

Beispiel 3: Eine, in einem Raum untergebrachte 35 mm dicke, durch Fußbodenheizung mit 35°C Vorlauftemperatur beheizte, Estrichfläche, hergestellt mit einer Mischung entsprechend Beispiel 1, erreicht schon nach 4 Tagen eine Restfeuchte von weniger als 1 %.

Beispiel 4: Eine, in einem geschlossenen Raum untergebrachte 35 mm dicke Estrichfläche, hergestellt mit einer Mischung entsprechend Beispiel 1, erreicht unter Einsatz eines Raumluftentfeuchters schon nach 5 Tagen eine Restfeuchte von weniger als 1 %.

**Patentansprüche**

1. Verfahren zur Herstellung eines belegereifen Estrichs, bei dem eine Fließestrichmasse aus α-Calciumsulfathalbhydrat als einzigem Bindemittel, inertem Zuschlagmaterial, Verflüssiger, Verzögerer und Wasser angemacht, vergossen und nach dem Abbinden bis zur Belegereife trocknen gelassen wird, wobei der Estrich eine Restfeuchte von maximal 1 Gew.% und eine Druckfestigkeit von mindestens 25 N/mm² aufweist, **dadurch gekennzeichnet**, daß gesondert von dem Anmachen mit Wasser ein Trokkenmörtel gemischt wird, und zwar mit maximal 50 Gew.% α-Calciumsulfathalbhydrat, das aus bei der Rauchgasentschwefelung anfallendem Gips im kontinuierlichen Autoklavverfahren gewonnen ist, und als Zuschlagmaterial Kalkstein, der frei von einem Feinkornanteil unter 40 μm ist, und daß auf die abgebundene Fließestrichmasse eine apparative Trocknungsmaßnahme ausgeübt wird.

2. Verfahren nach Anspruch 1, **dadurch gekennzeichnet**, daß die Trockenzeit vom Vergießen der Fließestrichmasse (ca. 20 Gew.% freie Feuchte) bis zur Belegereife (maximal 1 Gew.% freie Feuchte) bei Anwendung der Trocknungsmaßnahme maximal die Hälfte der Zeit des Trocknenlassens bei Normalverhältnissen mit 20°C und 85 % relativer Luftfeuchte ist.

3. Verfahren nach Anspruch 1 oder 2, **dadurch gekennzeichnet**, daß die abgebundene Fließestrichmasse zum Trocknen mittels einer Fußbodenheizung erwärmt wird.

4. Verfahren nach Anspruch 1, 2 oder 3, **dadurch gekennzeichnet**, daß bei einer Wärme-Trocknungsmaßnahme die Temperatur der abgebundenen Fließestrichmasse maximal 55°C beträgt.

5. Verfahren nach einem der vorhergehenden Ansprüche, **dadurch gekennzeichnet**, daß die Fließestrichmasse in der Trockensubstanz mindestens 35 Gew.% α-Calciumsulfathalbhydrat und maximal 65 Gew.% Zuschlagmaterial aufweist und mit einem Wasserfeststoffverhältnis 0,17 - 0,23 eingestellt ist.

**Claims**

1. A method of producing a plaster flooring ready for covering, wherein a fluid flooring mass comprising α-calcium sulphate hemihydrate as sole binding agent, inert aggregate, liquefier, retarder and water is prepared, cast and, after setting, is allowed to dry until ready for covering, the plaster flooring having a residual moisture content of maximum 1 wt.% and a compressive strength of at least 25 N/mm², characterised in that separately from the preparation process using water, a dry mortar is mixed, using a maximum of 50 wt.% α-calcium sulphate hemihydrate, which is obtained by the continuous autoclave method from gypsum produced during flue gas desulphurisation, and, as aggregate, limestone which is free of a fine-grain constituent below 40 μm, and in that a drying process using apparatus is effected on the set fluid flooring mass.

2. A method according to claim 1, characterised in that on application of the drying process, the drying time from when the fluid flooring mass (approx. 20 wt.% free moisture) is cast until it is ready for covering (maximum 1 wt.% free moisture) is at maximum half the time of when allowed to dry under normal conditions at 20°C and with 85% relative air humidity.

3. A method according to claim 1 or 2, characterised in that the set fluid flooring mass is heated by means of a floor heating installation for the purposes of drying.

4. A method according to claim 1, 2, or 3, characterised in that the temperature of the set fluid flooring mass is at maximum 55°C during a process of drying by heating.

5. A method according to any one of the preceding claims, characterised in that the fluid flooring mass as a dry substance has at least 35 wt.% α-calcium sulphate hemihydrate and a maximum of 65 wt.% aggregate and is used with a proportion of water to solid substance of 0.17 - 0.23.

et est réglée à un rapport eau-matière solide de 0,17 à 0,23.

## Revendications

1. Procédé de fabrication d'un plâtre apte à être recouvert, dans lequel une masse de plâtre fluide constituée par du sulfate de calcium α semihydraté en tant qu'unique liant, un additif inerte, un fluidifiant, un retardateur et de l'eau, est coulée et, après la prise, mise à sécher jusqu'à ce qu'elle soit apte à être recouverte, le plâtre présentant une humidité résiduelle d'au plus 1 % en poids et une résistance à la pression d'au moins 25N/mm$^2$, caractérisé en ce que, séparément du gâchage à l'eau, un mortier sec est mélangé, et ce avec au maximum 50% en poids de sulfate de calcium α semihydraté qui est obtenu dans le procédé de traitement continu en autoclave à partir du gypse formé au cours de la désulfuration des gaz de fumée, et un additif qui est un calcaire dépourvu d'une fraction de grains fins inférieure à 40,μm, et en ce que la masse de plâtre fluide prise est soumise à une opération de séchage effectuée à l'aide d'un appareillage.

2. Procédé selon la revendication 1, caractérisé en ce que la durée du séchage depuis la coulée de la masse de plâtre fluide (environ 20 % en poids d'humidité libre) jusqu'à l'état d'aptitude au recouvrement (au maximum 1 % en poids d'humidité libre) lors de l'opération de séchage représente au plus la moitié de la durée du séchage spontané dans les conditions normales d'une température de 20°C et d'une humidité relative de l'air de 85 %.

3. Procédé selon la revendication 1 ou 2, caractérisé en ce que la masse de plâtre fluide prise est chauffée par un chauffage par le sol pour le séchage.

4. Procédé selon la revendication 1, 2 ou 3, caractérisé en ce que, lors d'une opération de séchage par la chaleur, la température de la masse de plâtre fluide prise est de 55°C au maximum.

5. Procédé selon l'une des revendications précédentes, caractérisé en ce que la masse de plâtre fluide présente dans la matière sèche au moins 35 % en poids de sulfate de calcium α semihydraté et au plus 65 % en poids d'additif